# DEMANDE DE BREVET EUROPEEN

(11) **EP 3 588 760 A1**
(43) Date de publication de la demande: **01.01.2020**
(21) Numéro de dépôt: 19182003.4
(22) Date de dépôt: 24.06.2019
(51) Int. Cl.: H02M 3/07

(54) **CONVERTISSEUR ABAISSEUR DE TENSION**

(30) Priorité: 25.06.2018 FR 1855674
(71) Demandeur: Commissariat à l'Energie Atomique et aux Energies Alternatives, 75015 Paris (FR)
(72) Inventeur: BERGOGNE, Dominique, 38054 GRENOBLE CEDEX 09 (FR)
(74) Mandataire: Cabinet Beaumont

(57) **Abrégé**

La présente description concerne un convertisseur abaisseur de tension continue comportant : au moins un premier élément résistif (12) en série avec un premier interrupteur (K) entre une première borne (11) et une deuxième borne (13) d'application d'une première tension continue (Vin) ; et un élément capacitif (C) entre une troisième borne (15) et une quatrième borne (17) de fourniture d'une deuxième tension continue (Vout) inférieure à la première, le noeud (19) entre ledit premier élément résistif (12) et le premier interrupteur (K) étant relié par une diode à ladite troisième borne, ledit premier interrupteur (K) étant rendu passant quand la deuxième tension (Vout) est supérieure à une tension de consigne (Vref) de cette deuxième tension.

## Description

### Domaine technique

La présente description concerne de façon générale les circuits électroniques et, plus particulièrement les convertisseurs de puissance.

La présente description s'applique aux convertisseurs de puissance fournissant une tension continue.

### Technique antérieure

La conversion de puissance est un domaine particulièrement développé car on retrouve un convertisseur de puissance dans la quasi-totalité des systèmes électroniques.

Les convertisseurs peuvent se diviser en deux grandes catégories, les convertisseurs à découpage et les régulateurs linéaires.

Dans un convertisseur à découpage, une tension continue d'entrée est découpée par un interrupteur commandé en modulation de largeur ou de fréquence d'impulsions. L'énergie est convertie par un transformateur inductif et la tension de sortie du transformateur est redressée pour fournir une tension continue.

Pour une conversion en abaisseur de tension avec un rapport de l'ordre de cent, ces convertisseurs sont encombrants en raison du rapport de transformation important requis. En particulier, ils ne sont pas intégrables.

Dans un régulateur linéaire, un élément actif (typiquement un transistor), connecté entre l'entrée et la sortie du convertisseur, est commandé pour ne laisser passer qu'une partie de l'énergie.

Pour un abaissement de la tension avec un rapport de l'ordre de cent, et notamment pour des hautes tensions d'entrée (de l'ordre de 1000 volts), le courant de fuite dans le ou les transistors de régulation est trop important pour que la solution soit réaliste industriellement.

Le document US 2010/0007407 décrit un circuit pour générer un signal de tension d'alimentation négatif, et un dispositif d'alimentation et appareil électronique associés.

Le document DE 35 45 323 décrit un appareil d'alimentation sans transformateur.

### Résumé de l'invention

Il existe un besoin pour un système de conversion de puissance continu-continu capable de fonctionner avec un rapport d'abaissement important (supérieur à 100).

Un mode de réalisation propose un convertisseur de tension, ayant un rapport d'abaissement d'au moins 100 et qui soit intégrable.

Un mode de réalisation propose un convertisseur dans lequel les fuites de courant n'ont pas d'incidence sur la tension fournie.

Un mode de réalisation pallie tout ou partie des inconvénients des convertisseurs de tension connus.

Un mode de réalisation prévoit un convertisseur abaisseur de tension continue comportant :
- au moins un premier élément résistif en série avec un premier interrupteur entre une première borne et une deuxième borne d'application d'une première tension continue ; et
- un élément capacitif entre une troisième borne et une quatrième borne de fourniture d'une deuxième tension continue inférieure à la première,
le noeud entre ledit premier élément résistif et le premier interrupteur étant relié par une diode à ladite troisième borne, ledit premier interrupteur étant rendu passant quand la deuxième tension est supérieure à une tension de consigne de cette deuxième tension.

Selon un mode de réalisation, le convertisseur comporte un comparateur à hystérésis de la deuxième tension par rapport à ladite tension de consigne, une sortie du comparateur fournissant un signal de commande du premier interrupteur.

Selon un mode de réalisation, ledit premier élément résistif introduit une différence de potentiel correspondant approximativement à la différence de tension entre les première et deuxième tensions.

Selon un mode de réalisation, ledit premier élément résistif est une résistance.

Selon un mode de réalisation, ledit premier élément résistif est constitué par la résistance drain-source à l'état passant d'un transistor MOS.

Selon un mode de réalisation, ledit transistor est un transistor GaN normalement passant.

Selon un mode de réalisation, le premier interrupteur est commandé en tout ou rien.

Selon un mode de réalisation, ladite diode est constituée d'un deuxième interrupteur commandé.

Selon un mode de réalisation, le convertisseur comporte un composant passif entre l'interrupteur et ladite deuxième borne.

Selon un mode de réalisation, le rapport entre les première et deuxième tensions est supérieur à 100.

Selon un mode de réalisation, la première tension est supérieure à 1000 volts.

Un mode de réalisation prévoit un procédé de conversion d'une première tension continue en une deuxième tension continue, dans lequel une charge d'un élément capacitif est contrôlée par un premier interrupteur commandé par un comparateur à hystérésis de la deuxième tension par rapport à une tension de consigne, ledit premier interrupteur étant rendu passant quand la deuxième tension est supérieure à une tension de consigne de cette deuxième tension.

Selon un mode de réalisation, le premier interrupteur court-circuite à la masse un noeud de fourniture d'énergie à l'élément capacitif.

Selon un mode de réalisation, un élément résistif relie une première borne d'application de la première tension audit noeud, ledit élément absorbant la chute de tension entre les première et deuxième tensions.

Un mode de réalisation prévoit une chaîne de conversion d'énergie comportant un convertisseur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un mode de réalisation d'un convertisseur de tension ;
la figure 2 illustre, par des chronogrammes (a), (b) et (c), le fonctionnement du convertisseur de la figure 1 ; et
la figure 3 représente un mode de réalisation d'une chaîne de conversion d'énergie comprenant le convertisseur de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les éléments amont (source d'énergie, convertisseur d'énergie, etc.) ou aval (charge, convertisseur linéaire, etc.) n'ont pas été détaillés, les modes de réalisation décrits étant compatibles avec les applications usuelles de convertisseur de tension.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

Selon les modes de réalisation décrits, on prévoit d'organiser la charge d'un élément capacitif par une commutation d'interrupteurs en tout ou rien. De plus, on prévoit d'assurer la chute de tension entre la tension d'entrée et la tension de sortie par un élément résistif. Un tel élément peut être constitué exclusivement de composants passifs, typiquement une résistance, ou être constitué d'un montage incluant un transistor placé dans des conditions de fonctionnement adaptées à créer un effet résistif dissipatif seul ou associé à d'autres éléments. De préférence, on utilise un transistor de type GaN, de préférence normalement passant, dont les conditions de polarisation de la grille ajustent sa résistance drain-source à l'état passant, de sorte que le transistor se comporte en source de courant. Un avantage d'un tel transistor par rapport à une résistance passive est de réduire la dissipation d'énergie. Par élément résistif, on entend exclure une pure inductance ou une pure capacité qui, selon les conditions de fonctionnement, peut se trouver dans un état où elle ne permet pas de faire chuter la tension à ses bornes.

Par haute et basse tensions, on fait référence à une différence relative avec un rapport d'au moins 100 entre les deux tensions. Dans les modes de réalisation plus particulièrement visés, la haute tension est une tension d'au moins 1000 volts tandis que la basse tension est une tension de l'ordre de la dizaine de volts, voire de quelques volts.

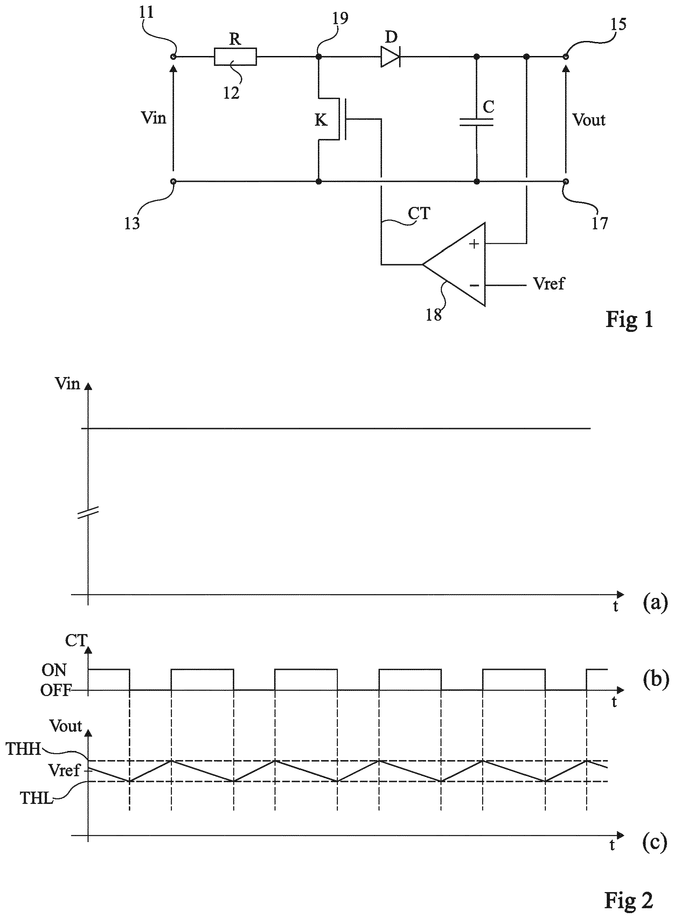

La figure 1 représente, de façon très schématique, un mode de réalisation d'un convertisseur 1 de tension.

Ce convertisseur 1 comporte :
- deux bornes 11 et 13 d'entrée d'application d'une haute tension continue Vin ;
- deux bornes 15 et 17 de fourniture d'une basse tension continue Vout ;
- un élément résistif 12, illustré par une résistance R, introduisant une différence de potentiel entre la borne 11 et un noeud 19, relié à la borne 13 par un premier interrupteur K ;
- un comparateur à hystérésis 18 comparant la tension de sortie Vout à une tension de consigne ou de référence Vref et fournissant un signal de commande CT à l'interrupteur K ; et
- un deuxième interrupteur D, typiquement une diode, entre le noeud 19 et la borne 15.

Les interrupteurs K et D sont commandés en tout ou rien et de façon complémentaire (l'interrupteur K est passant quand l'interrupteur D est bloqué et inversement). Selon un mode de réalisation préféré, l'interrupteur K est constitué d'un transistor MOS et l'interrupteur D est constitué d'une diode (anode côté noeud 19). Ainsi, l'interrupteur D est à conduction spontanée (quand la tension entre les bornes 19 et 15 excède son seuil de mise en conduction) tandis que l'interrupteur K est commandé par le signal de commande CT.

Le signal de commande de l'interrupteur K est fourni par le comparateur à hystérésis 18. En choisissant la tension de consigne Vref du comparateur 18, on contrôle la charge du condensateur C autour de cette valeur Vref avec une variation correspondant à l'hystérésis du comparateur 18. Ainsi, les interrupteurs K et D dirigent respectivement le courant soit vers la masse soit vers le condensateur C de stockage, permettant ainsi le contrôle de la charge de ce condensateur.

Le comparateur 18 est, de préférence, alimenté par la tension Vout. Ainsi, le convertisseur ne requiert pas d'alimentation auxiliaire pour son fonctionnement.

Le rôle de l'interrupteur D est d'isoler l'électrode positive du condensateur C lorsque l'interrupteur K court-circuite le noeud 19 à la masse. C'est pourquoi, une diode est particulièrement adaptée.

L'élément résistif 12 apporte la chute de tension nécessaire pour passer de la tension Vin à la tension Vout (à la chute de tension dans la diode D à l'état passant près). Par conséquent, les composants en aval de l'élément 12 n'ont pas besoin de supporter une chute de tension équivalente à la différence entre les tensions Vin et Vout, celle-ci étant absorbée par l'élément 12. L'élément 12 est, de préférence, une résistance R. Un avantage d'utiliser une résistance est qu'il est aisé de la dimensionner en fonction de l'application et de la différence de potentiel souhaitée entre l'entrée et la sortie.

Selon le mode de réalisation représenté, les potentiels de référence des tensions Vin et Vout sont les mêmes. Par conséquent, les bornes 13 et 17 sont, dans ce mode de réalisation, confondues.

Selon un autre mode de réalisation non représenté, l'élément 12 est réparti en deux éléments ou parties (par exemple deux résistances de même valeur), l'un entre la borne 11 et le noeud 19, l'autre entre la borne 13 et le noeud de connexion de l'interrupteur K. Dans ce cas, les potentiels de référence des tensions Vin et Vout sont différents et le potentiel de la borne 17 devient le potentiel de référence de l'application.

La figure 2 illustre, par des chronogrammes (a), (b) et (c), le fonctionnement du convertisseur de la figure 1.

Les chronogrammes (a), (b) et (c) illustrent respectivement des exemples d'allures de la tension Vin, du signal de commande CT et de la tension Vout. Les représentations des chronogrammes (a), (b) et (c) sont en régime établi. Au démarrage (à la mise sous tension des bornes 11 et 13), l'interrupteur K est ouvert afin de permettre la charge initiale du condensateur C et le fonctionnement du comparateur 18.

L'hystérésis du comparateur 18 définit deux seuils, respectivement supérieur THH et inférieur THL à la tension Vref, qui fixent les niveaux de commutation du comparateur 18, donc les fermetures et ouvertures du commutateur K. L'écart entre les seuils THL et THH est choisi en fonction des variations de la tension Vout qui sont acceptables par l'application. Cet écart conditionne le rythme de commutation de l'interrupteur K. On voit donc que la régulation s'effectue également en fonction des besoins d'une charge connectée entre les bornes 15 et 17. En effet, pour un convertisseur donné, c'est-à-dire avec des composants R, C et des seuils THL et THH donnés, plus la charge consomme, plus les périodes de décharge du condensateur ou de fermeture de l'interrupteur K sont courtes. Les périodes de charge du condensateur (interrupteur K ouvert) sont à l'inverse allongées.

Par rapport à un régulateur linéaire ou à découpage usuel, le contrôle du courant se fait ici en dérivant le courant à la masse et non en interrompant ce courant. Ainsi, le courant de fuite de l'interrupteur K réalisant cette fonction n'est pas préjudiciable au fonctionnement.

Le courant prélevé à la source d'énergie appliquée entre les bornes 11 et 13 dépend de la valeur de la résistance R constituant l'élément 12.

Un avantage des modes de réalisation décrits est que tous les éléments actifs (interrupteur K, diode D), n'ont pas besoin de supporter une tension importante. Ils n'ont donc besoin d'être choisis qu'en fonction du courant qu'ils peuvent supporter à l'état passant et qui correspond au courant fixé par la résistance 12.

Ainsi, le circuit décrit en relation avec la figure 1 peut sans problème être réalisé sous la forme d'un circuit intégré.

Un avantage du convertisseur décrit est que les interrupteurs K et D qui servent à faire passer le courant fonctionnent en tout-ou-rien. L'échauffement est donc inférieur à celui d'un régulateur linéaire.

De plus, une commande en tout ou rien (de l'interrupteur K) est nettement moins gourmande en énergie qu'une commande en gradation de puissance (variation de la résistance série à l'état passant) comme c'est le cas dans un régulateur linéaire. Le circuit de commande en est simplifié, ainsi que l'encombrement du circuit final.

On note que, par rapport à un régulateur shunt où la commande contrôle la résistance série à l'état passant d'un transistor pour dévier une partie du courant vers la masse, le convertisseur présenté dans les modes de réalisation décrits présente l'avantage que l'interrupteur K est commandé en tout ou rien, ce qui simplifie sa commande. De plus, comme indiqué plus haut, la présence de l'élément 12 qui fait chuter la tension rend le circuit compatible avec une réalisation intégrée.

Un montage tel que décrit peut servir de dispositif limiteur (ou de protection) du niveau d'une tension abaissée d'alimentation d'un circuit de commande d'un convertisseur à découpage. Par exemple, cette solution peut être appliquée à un circuit tel que décrit dans la demande de brevet FR-A-2998735 pour apporter une protection contre des surtensions susceptibles d'apparaître à haute température ou haute tension d'entrée dues au courant de fuite d'un transistor GaN normalement passant (J1) ne remplissant plus la fonction de régulation de la basse tension.

Le rythme (de l'ordre du Hertz ou de la dizaine de Hertz) de commutation de l'interrupteur K est, en pratique, nettement inférieur à celui (de l'ordre de la centaine de kilo Hertz) d'un interrupteur d'une alimentation à découpage.

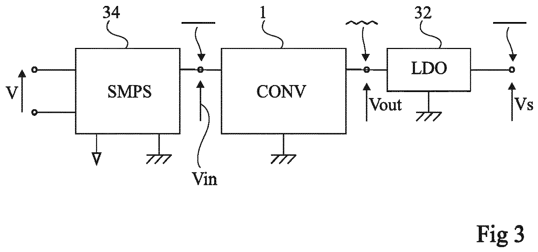

La figure 3 représente un mode de réalisation d'une chaîne d'alimentation comprenant un convertisseur 1 (CONV) du type de celui décrit en relation avec la figure 1.

La figure 3 montre que le convertisseur décrit peut être complété, en aval, par un régulateur linéaire 32 (LDO). Un tel régulateur linéaire 32 permet de lisser la tension de sortie Vout et ainsi de masquer les variations de la tension Vout dues aux commutations capacitives.

Par ailleurs, en amont du convertisseur 2, on peut prévoir une alimentation à découpage 34 (SMPS) dont l'entrée reçoit une tension V continue et dont la sortie fournit une tension continue.

La figure 3 fait également ressortir que, du point de vue des potentiels de référence des circuits, le potentiel de référence ou masse de la tension V peut être différent de celui du reste de l'application.

Le convertisseur 1 trouve un intérêt tout particulier pour des hautes tensions d'entrée (de plusieurs centaines, à plusieurs milliers de volts) et des basses tensions de sortie (de quelques volts à quelques dizaines de volts) et pour des courants de l'ordre de la dizaine à la centaine de microampères. La valeur de la résistance R est, dans le cas d'un composant passif, par exemple de l'ordre du MΩ.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, le choix de la valeur du condensateur C, de la résistance 12, ainsi que de la valeur Vref, dépend de l'application. De plus, bien que les modes de réalisation décrits prennent l'exemple de tensions Vin et Vout positives par rapport au potentiel de référence des bornes 13 et 17, ils se transposent sans difficulté à la conversion d'une tension négative.

Enfin, la mise en oeuvre pratique des modes de réalisation et variantes décrits est à la portée de l'homme du métier à partir des indications fonctionnelles données ci-dessus.

## Revendications

1. Convertisseur abaisseur de tension continue comportant :
- au moins un premier élément résistif (12) en série avec un premier interrupteur (K) entre une première borne (11) et une deuxième borne (13) d'application d'une première tension continue (Vin) ; et
- un élément capacitif (C) entre une troisième borne (15) et une quatrième borne (17) de fourniture d'une deuxième tension continue (Vout) inférieure à la première,
le noeud (19) entre ledit premier élément résistif (12) et le premier interrupteur (K) étant relié par une diode (D) à ladite troisième borne, ledit premier interrupteur (K) étant rendu passant quand la deuxième tension (Vout) est supérieure à une tension de consigne (Vref) de cette deuxième tension.

2. Convertisseur selon la revendication 1, comportant un comparateur à hystérésis (18) de la deuxième tension (Vout) par rapport à ladite tension de consigne (Vref), une sortie du comparateur fournissant un signal de commande (CT) du premier interrupteur (K).

3. Convertisseur selon la revendication 1 ou 2, dans lequel ledit premier élément résistif (12) introduit une différence de potentiel correspondant approximativement à la différence de tension entre les première (Vin) et deuxième (Vout) tensions.

4. Convertisseur selon l'une quelconque des revendications 1 à 3, dans lequel ledit premier élément résistif (12) est une résistance (R).

5. Convertisseur selon l'une quelconque des revendications 1 à 3, dans lequel ledit premier élément résistif est constitué par la résistance drain-source à l'état passant d'un transistor MOS.

6. Convertisseur selon la revendication 5, dans lequel ledit transistor est un transistor GaN normalement passant.

7. Convertisseur selon l'une quelconque des revendications 1 à 6, dans lequel le premier interrupteur (K) est commandé en tout ou rien.

8. Convertisseur selon l'une quelconque des revendications 1 à 7, dans lequel ladite diode (D) est constituée d'un deuxième interrupteur commandé.

9. Convertisseur selon l'une quelconque des revendications 1 à 8, comportant un composant passif entre l'interrupteur (K) et ladite deuxième borne (13).

10. Convertisseur selon l'une quelconque des revendications 1 à 9, dans lequel le rapport entre les première et deuxième tensions est supérieur à 100.

11. Convertisseur selon l'une quelconque des revendications 1 à 10, dans lequel la première tension est supérieure à 1000 volts.

12. Procédé de conversion d'une première tension continue (Vin) en une deuxième tension continue (Vout), dans lequel une charge d'un élément capacitif (C) est contrôlée par un premier interrupteur (K) commandé par un comparateur à hystérésis (18) de la deuxième tension par rapport à une tension de consigne, ledit premier interrupteur (K) étant rendu passant quand la deuxième tension (Vout) est supérieure à une tension de consigne (Vref) de cette deuxième tension.

13. Procédé selon la revendication 12, dans lequel le premier interrupteur (K) court-circuite à la masse un noeud (19) de fourniture d'énergie à l'élément capacitif (C).

14. Procédé selon la revendication 12, dans lequel un élément résistif (12) relie une première borne d'application de la première tension (Vin) audit noeud (19), ledit élément absorbant la chute de tension entre les première et deuxième tensions.

15. Chaîne de conversion d'énergie comportant un convertisseur abaisseur selon l'une quelconque des revendications 1 à 11.
